# EUROPEAN PATENT APPLICATION

(11) **EP 1 566 125 A1**
(43) Date of publication of application: **24.08.2005**
(21) Application number: 05003387.7
(22) Date of filing: 17.02.2005
(51) Int. Cl.: A47J 29/06

(54) **Egg holder**

(30) Priority: 18.02.2004 IT MI20040057 U
(71) Applicant: Pavoni Italia S.p.a., 24040 Suisio (BG) (IT)
(72) Inventor: Raineri, Paolo, 24040 Suisio (BG) (IT)
(74) Representative: Premru, Rok

(57) **Abstract**

The present invention relates to an egg cooking holder (1), comprising an egg container (2), characterized in that it is wholly made of a flexible material and in that it has two arms (3), each having a free end (9), said free ends (9) of said arms (3) being movable between a first position, in which they are spaced apart and substantially level with said egg container (2), and a second position, in which they are in mutual contact, and above said egg container (2), said free ends (9) of said arms (3) having reversible fastening means (10) for allowing the ends (9) of said arms (3) to be temporarily joined together, to form a self-supporting structure having the function of a handle.

## Description

This model addresses an egg holder for cooking soft, medium or hard-boiled eggs.

Eggs are known to be cooked in boiling water by using egg holders which comprise a container, open at its top and having an upwardly extending handle allowing to dip the holder in and out of boiling water without contacting the water.

However, prior art egg holders have various drawbacks.

Particularly, these holders may be only used to cook eggs and not to serve eggs on table.

Also, in prior art holders, the introduction and removal of eggs in and out of the holder may be hindered by the presence of the handle.

Also, prior art holders are made of metal and the handle tends to get heated during egg cooking, thereby involving the risk that the user may get burnt.

The object of this model is to obviate at least some of the drawbacks of prior art egg cooking holders.

This object is fulfilled by a holder according to the principle of claim 1.

Further advantages may be also obtained by the additional characteristics of the dependent claims.

A possible embodiment of the model, as claimed in the attached claims, will be described hereafter with reference to the accompanying drawings, in which:

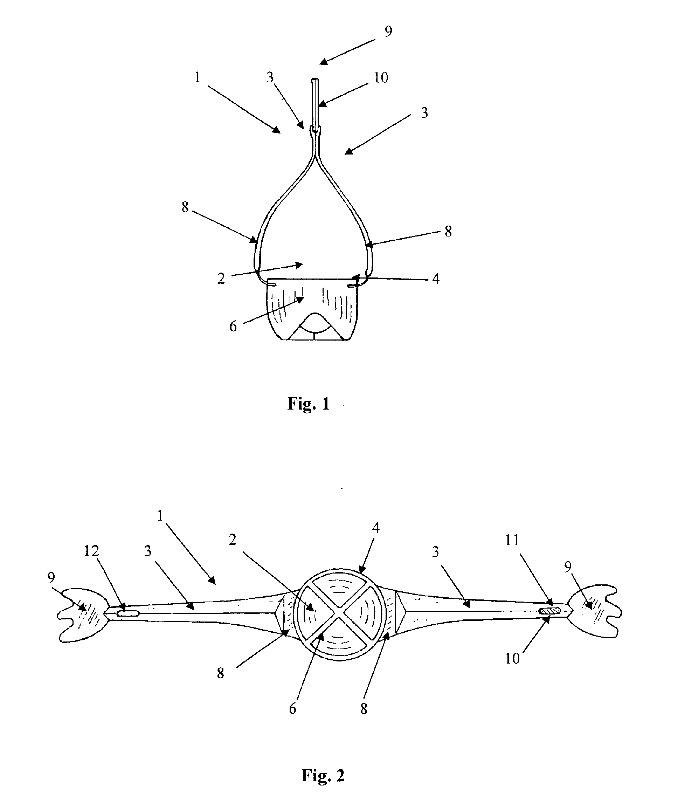

- Fig. 1 is a side view of the model according to a first embodiment of use;
- Fig. 2 is a top view of the model according to a first embodiment of use;

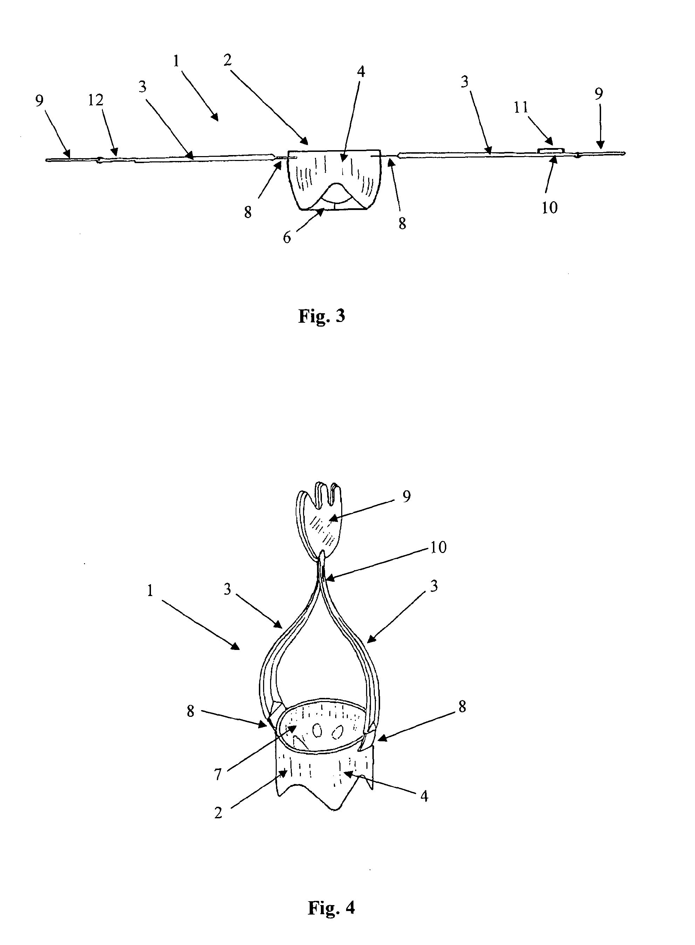

- Fig. 3 is a side view of the model according to a first embodiment of use;
- Fig. 4 is a perspective view of the model according to a second embodiment of use.

Referring to the drawings, the reference numeral 1 generally designates an egg holder comprising an egg container 2 and a pair of arms 3, which are joined to the egg containing structure 2 and have free ends 9.

The egg holder 1 is wholly made of a flexible material.

The arms 3 tend to take a substantially horizontal position, with their free ends 9 bending downards.

However, due to the fact that the arms 3 are made of a flexible material, the ends 9 may be easily lifted and drawn closer to each other until they come in contact above the container 2.

Once they come in contact, the free ends 9 may be reversibly joined together by reversible fastening means.

Thus, the two arms 3 provide a self-supporting structure which acts as a handle for the egg holder and allows to dip the egg container 2 in and out of boiling water.

Once the egg has been cooked, the arms 3 may be separated and brought to a horizontal position, thereby allowing, together with the egg container 2, to serve the egg directly on the plate.

Preferably, the two arms 3 have a thinner portion 8 at the junction with the container.

This characteristic allows to reduce the force required to lift the arms 3.

The reversible fastening means 10 may be a snap fastener, which is obtained by forming a projection 11 on one of the two arms, adapted to be snap-fitted in a hole 12 formed in the other arm.

Those skilled in the art may obviously find other technically equivalent solutions to reversibly fasten the ends 9 of the arms 3.

Preferably the free ends 9 of the two arms 3 are wider than the rest of the arm.

This characteristic facilitates the manual grasp at the top of the handle of the holder 1.

In accordance with the preferred embodiment, the material to make the egg holder is a silicone rubber, particularly a platinum cured silicone rubber.

Technically equivalent materials may be obviously also used, such as elastomeric rubbers and thermoplastic rubbers.

The above materials are not only suitable for their mechanical flexibility properties but also for their excellent resistance to egg cooking temperatures and for their low heat conductivity.

These materials further allow to fabricate low-cost holders in a wide range of colors.

Preferably, the egg containing structure 2 includes a substantially cylindrical element 4, having a sufficient inside diameter to receive an egg and a bottom element adapted to retain an egg.

In the embodiments as shown herein, the bottom element has a wavy profile at its bottom, which provides a better stability to the egg holder.

In a first embodiment, the bottom of the structure 2 is composed of two cross members 6 having an arched profile, for receiving an egg.

The space between the cross members 6 allows water passage both during cooking and during removal of the holder from water.

According to an alternative embodiment, as shown in Figure 4, the bottom of the structure consists of a concave surface 7, whose profile matches a portion of an egg surface.

The concave surface 7 further has holes to allow water passage both during cooking and during removal of the holder from water.

## Claims

1. An egg cooking holder (1), comprising an egg container (2), **characterized in that** it is wholly made of a flexible material and **in that** it has two arms (3), each having a free end (9), said free ends (9) of said arms (3) being movable between a first position, in which they are spaced apart and substantially level with said egg container (2), and a second position, in which they are in mutual contact, and above said egg container (2), said free ends (9) of said arms (3) having reversible fastening means (10) for allowing the ends (9) of said arms (3) to be temporarily joined together, to form a self-supporting structure having the function of a handle.

2. An egg cooking holder as claimed in claim 1, wherein said arms (3) have a reduced thickness at the junction with the egg container (2).

3. An egg cooking holder as claimed in claim 1 or 2, wherein said arms (3) have a widened portion (9) at their free ends, adapted to provide a grasping surface (2).

4. An egg cooking holder (1) as claimed in claim 1 or 2 or 3, wherein said means (10) for reversibly joining together the ends of the arms (2) is a snap fastener.

5. A holder as claimed in any of the preceding claims, wherein said egg container (2) includes a substantially cylindrical element (4) with a bottom.

6. An egg cooking holder as claimed in claim 5, wherein said substantially cylindrical element (2) has a base end with a wavy profile.

7. An egg cooking holder as claimed in claim 5 or 6, wherein the bottom of said container consists of two cross members 6 having an arched profile.

8. An egg cooking holder as claimed in claim 5 or 6, wherein the bottom of said container consists of a concave surface (7) with holes therein.

9. An egg cooking holder as claimed in any of the preceding claims, wherein said flexible material is silicone or elastomeric rubber or thermoplastic rubber.
